# EUROPEAN PATENT SPECIFICATION

(11) **EP 3 151 204 B1**
(45) Date of publication and mention of the grant of the patent: **14.10.2020**
(21) Application number: 15803420.7
(22) Date of filing: 26.05.2015
(51) Int. Cl.: G07D 7/12, G01J 1/02, H04N 1/028, H04N 1/04

(54) **LINE LIGHT SOURCE AND OPTICAL LINE SENSOR UNIT**
LINIENLICHTQUELLE UND OPTISCHE LICHTSENSOREINHEIT
SOURCE DE LUMIÈRE LINÉAIRE ET UNITÉ DE CAPTEUR LINÉAIRE OPTIQUE

(30) Priority: 02.06.2014 JP 2014114256
(43) Date of publication of application: 05.04.2017
(73) Proprietor: Vienex Corporation, Kanonji-shi, Kagawa 768-0021 (JP)
(72) Inventor: BAKU, Kenchu, Kanonji-shi Kagawa 768-0021 (JP); SHOJI, Motoari, Kanonji-shi Kagawa 768-0021 (JP); RYUMAN, Kazuaki, Kanonji-shi Kagawa 768-0021 (JP); MURAKAMI, Satoru, Kanonji-shi Kagawa 768-0021 (JP)
(74) Representative: Mewburn Ellis LLP
(86) International application number: PCT/JP2015/065058
(87) International publication number: WO 2015/186566

(56) References cited:
- EP-A1- 0 594 444
- JP-A- 2003 046 726
- JP-A- 2009 290 167
- JP-A- 2010 266 931
- JP-A- 2011 223 389
- JP-A- 2012 253 747
- JP-A- 2013 083 528
- JP-A- 2013 222 346
- US-A1- 2007 133 858
- US-A1- 2007 145 233
- US-A1- 2012 162 727
- US-A1- 2012 318 961

## Description

### TECHNICAL FIELD

The present invention relates to a line light source for emitting a light to paper sheet such as banknote or securities. In addition, the present invention relates to an optical line sensor unit for reading the light emitted from the line light source and passed through or reflected by the paper sheet.

### BACKGROUND ART

The optical line sensor unit is used for recognizing a color and a pattern of the paper sheet in order to analyze the paper sheet. The optical line sensor unit includes a line light source for lighting the paper sheet, a lens array for guiding a light (including fluorescence) emitted from the line light source and passed through or reflected by the paper sheet, and a light receiving portion for receiving a light guided by the lens array.

The light emitted from the line light source includes a visible light mainly for reading the pattern on front and back surfaces of the paper sheet, and a UV light and an infrared light mainly for verifying the authenticity of the paper sheet.

A typical configuration of the line light source in a conventional technique includes a light guide longitudinally extending in a direction perpendicular to a conveyance direction of the paper sheet, a light diffusion pattern longitudinally formed on one side surface of the light guide, a light source portion provided in the vicinity of one end surface of the light guide, and a cover for holding the light guide (refer to Patent Document 1).

According to the line light source in the conventional technique, the light emitted from the light source portion into the light guide through one end is diffused and refracted by the light diffusion pattern and partially emitted from one side surface of the light guide toward the paper sheet. By devising a fine shape of the light diffusion pattern, the light can illuminate the paper sheet while an amount of the light which illuminates the paper sheet is prevented from varying along a longitudinal direction. As a result, the paper sheet can be stably read, and its shape and pattern can be accurately recognized.

### PRIOR ART DOCUMENTS

### PATENT DOCUMENTS

Patent Document 1: Unexamined Japanese Patent Publication No. 2006-39996
Patent Document 2: Unexamined Japanese Patent Publication No. 2001-229722

US 2012/0318961 proposes an image sensor module. EP A 0594444 proposes an image reading apparatus.

### SUMMARY OF THE INVENTION

### PROBLEMS TO BE SOLVED BY THE INVENTION

However, according to the configuration disclosed in Patent Document 1 in which the light source portion is set at the one end of the light guide, in a case where a light source portion for emitting a visible light or an infrared light, and a light source portion for emitting a UV light are both to be set, since the light source portion for emitting the UV light is large in volume, the problem is that the two light source portions cannot be set at the one end of the light guide.

Furthermore, when the UV light is emitted from the UV light emitting light source portion, the emitted UV light illuminates a base member of that light source portion and fluorescence is secondarily emitted in some cases. In addition, when the UV light emitted from the UV light emitting light source portion and entered into the one end surface is passed through the other end surface of the light guide and illuminates the other light source portion, fluorescence is also secondarily emitted in some cases. When the fluorescence is introduced into the light guide and detected by a light receiving element, the accuracy for verifying the authenticity of the paper sheet is reduced.

Furthermore, when the light entered into the one end surface of the light guide reaches the other end surface of the light guide and leaks out from it, an amount of the light to be emitted from the one side surface of the light guide toward the paper sheet is not sufficiently ensured in some cases.

The present invention was made in view of the above circumstances, and it is an object of the present invention to provide a line light source in which a light source portion for emitting a visible light or infrared light and a light source portion for emitting a UV light can be both set, and an optical line sensor unit having the same.

Furthermore, it is another object of the present invention to provide a line light source in which a light source portion is set at each end of a light guide and fluorescence is not emitted from one side surface of the light guide to a paper sheet, and an optical line sensor unit having the same.

Furthermore, it is still another object of the present invention to provide a line light source in which a light source portion is set at each end of a light guide and an amount of the light emitted from one side surface of a light guide toward the paper sheet is not reduced, and an optical line sensor unit having the same.

### MEANS FOR SOLVING THE PROBLEMS

A line light source in one aspect of the present invention is provided in claim 1.

According to the above line light source, the UV light emitted from the first light source portion to the light guide enters into the light guide through the first end surface, and the light emitted from the second light source portion to the light guide enters into the light guide through the second end surface, so that the light source portion for emitting the visible light or infrared light and the light source portion for emitting the UV light can be both set in the line light source.

According to the above line light source, when the UV light is emitted from the first light source portion for emitting the UV light, and the emitted UV light illuminates a member of the first light source portion, fluorescence is emitted in some cases. Thus, since the first filter transmits the UV light, and reflects or absorbs the visible light or the light in the wavelength range from the visible light to the infrared light, the fluorescence can be prevented from entering into the light guide.

According to the above configuration, the visible light or the light in the wavelength range from the visible light to the infrared light can enter from the second light source portion into the light guide through the second filter. In addition, when the UV light emitted from the first light source portion into the light guide passes through the second end surface of the light guide, the UV light is blocked by the second filter, so that the UV light can be prevented from illuminating the second light source portion. Therefore, the fluorescence can be prevented from being produced from the second light source portion.

According to the above line light source, the UV light emitted from the first light source portion to the light guide enters into the light guide through the first filter, reflected by the second filter at the second end surface, and returns to the light guide, so that the light does not leak out through the second end surface unnecessarily. Similarly, the light emitted from the second light source portion to the light guide enters into the light guide through the second filter, is reflected by the first filter at the first end surface, and returns to the light guide, so that the light does not leak out through the first end surface unnecessarily. Therefore, the amount of the light emitted from the one side surface of the light guide toward the paper sheet can be sufficiently ensured without being reduced.

In addition, an optical line sensor unit for reading a paper sheet according to the present invention is provided in claim 7.

According to the above optical line sensor unit, when the UV light is emitted from the first light source portion, the UV light is blocked by the third filter and cannot directly enter into the light receiving portion. Thus, only fluorescence from the paper sheet can be received. When the visible light or the infrared light is emitted from the second light source portion, the light reflected by the paper sheet or passes through the paper sheet enters into the light receiving portion passing through the third filter, so that the light receiving portion can receive the normal reflected light or transmitted light.

### BRIEF DESCRIPTION OF THE DRAWINGS

FIG. 1 is a cross-sectional view schematically illustrating a configuration of an optical line sensor unit in an embodiment of the present invention.
FIG. 2 is a cross-sectional view schematically illustrating an additional configuration of an optical line sensor unit.
FIG. 3 is a perspective view of a line light source.
FIG. 4 is an exploded perspective view illustrating component members of the line light source.
FIG. 5 is a side view of the line light source.

### MODE FOR CARRYING OUT THE INVENTION

Hereinafter, an embodiment of the present invention will be described with reference to the drawings.

### <Optical line sensor unit>

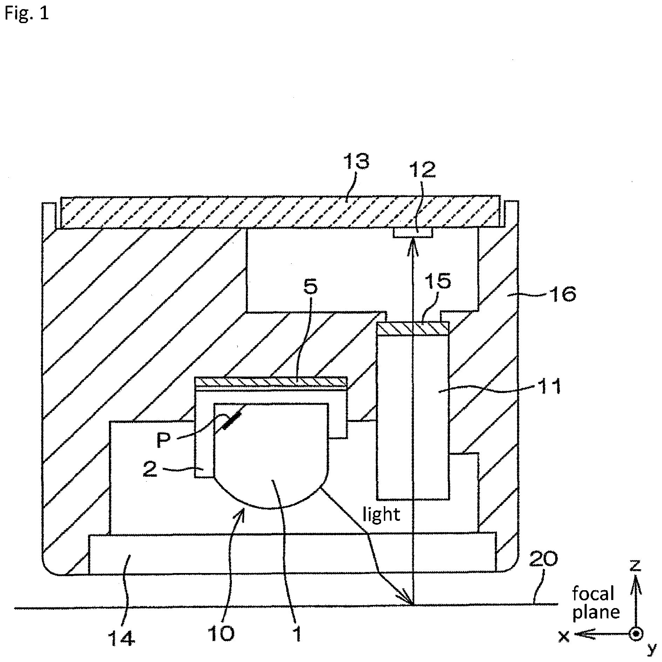

FIG. 1 is a schematic cross-sectional view illustrating a configuration of an optical line sensor unit in an embodiment of the present invention.

The optical line sensor unit includes a housing 16, a line light source 10 for lighting a paper sheet, a lens array 11 for guiding a light emitted from the line light source 10 to a focal plane 20 and reflected by the paper sheet, and a light receiving portion 12 mounted on a substrate 13, for receiving a transmitted light after being guided by the lens array 11. The paper sheet is transferred along the focal plane 20 in one direction (shown by X).

The housing 16, the line light source 10, the light receiving portion 12, and the lens array 11 extend in a y direction, that is, a direction perpendicular to a sheet surface, and FIG. 1 illustrates their cross-sectional surfaces.

The line light source 10 is a unit for emitting a light toward the paper sheet set on the focal plane 20. The kinds of the emitted light include a visible light and a UV light, and also include an infrared light.

The UV light has a wavelength peak of 300 nm to 400 nm, and the infrared light has a wavelength peak up to 1500 nm.

At least the UV light of them is emitted so as not to temporally overlap with another light (that is, so as to temporally shift from another light). The infrared light is emitted so as to temporally overlap or so as not to temporally overlap with the visible light in some cases.

The light emitted from the line light source 10 passes through a protection glass 14 and is collected to the focal plane 20. The protection glass 14 is not necessarily required and may be omitted, but it is desirably set to protect the line light source 10 and the lens array 11 from being damaged or flying dust while in use.

The material of the protection glass 14 is required to be able to transmit the light emitted from the line light source 10 and may include a transparent resin such as acrylic resin or cycloolefin-based resin. However, in this embodiment of the present invention, the material which transmits the UV light especially, such as white sheet glass or borosilicate glass is preferably used.

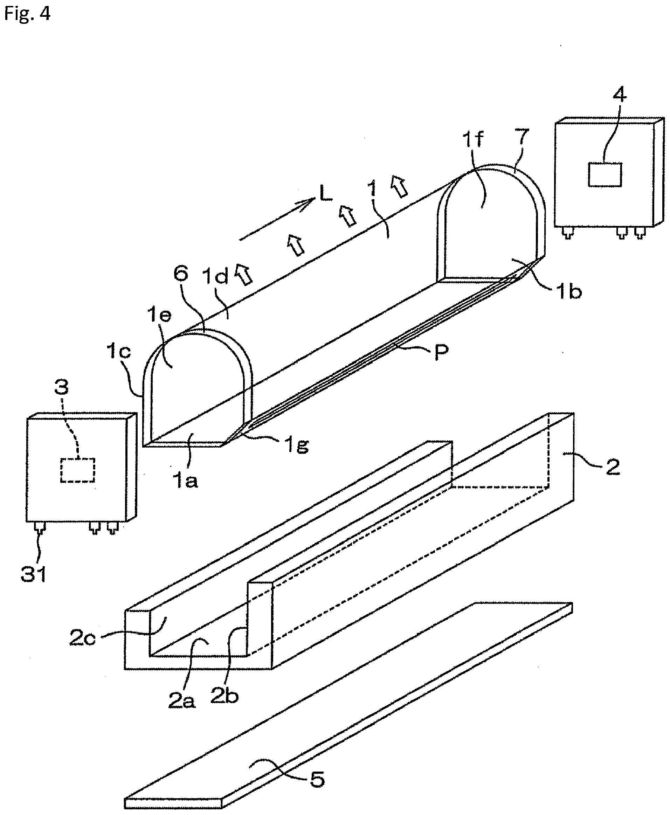

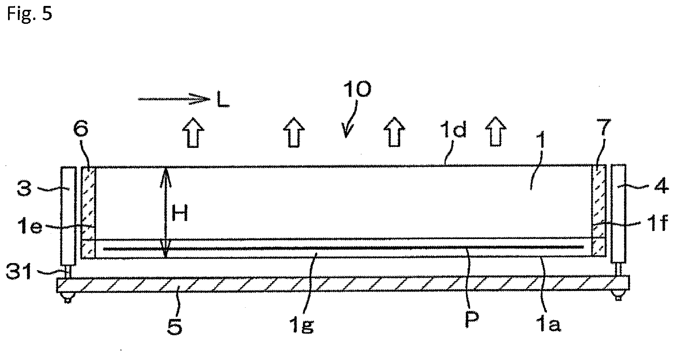

A substrate 5 is set to face a bottom surface of the line light source 10 to fix a second light source portion 3 and a first light source portion 4 disposed at both ends of the line light source 10 (refer to Figs. 4 and 5). The substrate 5 is a thin insulating plate made of phenol or epoxy glass, and its back surface has a wiring pattern composed of copper foil. Terminals of the second light source portion 3 and the first light source portion 4 are inserted into holes formed in various places of the substrate 5 and bonded to the wiring pattern with solder on the back surface of the substrate, so that the second light source portion 3 and the first light source portion 4 can be mounted on and fixed to the substrate 5, and a power is supplied from a certain drive power supply (not illustrated) to the second light source portion 3 and the first light source portion 4 through the wiring pattern on the substrate back surface to drive and control their light emission.

The lens array 11 is an optical element to form an image of the light reflected by the paper sheet, in the light receiving portion 12, and it may be a rod lens array such as SELFOC lens array (registered trademark: manufactured by Nippon Sheet Glass Company, Limited). In this embodiment of the present invention, the magnification of the lens array 11 is set to 1 (upright).

A UV light blocking filter film 15 is preferably provided in a certain position between the focal plane 20 and the light receiving portion 12, as a "third filter" which reflects or absorbs a UV light to prevent the UV light from entering into the light receiving portion 12. According to this embodiment of the present invention, the UV light blocking filter film 15 is mounted on a surface of the lens array 11 to function to block the UV light. In this specification, the term "to block the light" means that the light is reflected or absorbed so as not to pass through.

The UV light blocking filter film 15 is not limited in particular and may be made of any material and have any structure as long as it can prevent the UV light from entering into the light receiving portion 12. For example, as a preferable filter film, a UV light absorbing film may be provided by mixing or coating an organic UV light absorbing agent in or on a transparent film, or an interference filter (bandpass filter) may be provided by forming multi-layer thin films having different transmittances or refractive indexes on a glass surface by vapor deposition with metal oxide such as titanium oxide or silicon oxide, or dielectric substance.

Furthermore, the UV light blocking filter film 15 is mounted on the output surface of the lens array 11 in the above, but it may be mounted on an input surface or a middle portion of the lens array 11, or may be directly vapor-deposited or applied to an inner surface of the protection glass 14. The point is that the UV light reflected by the paper sheet is to be prevented from entering into the light receiving portion 12.

The light receiving portion 12 is mounted on the substrate 13 and includes a light receiving element which receives the reflected light and reads an image as an electric output by performing photoelectric conversion. The material and the structure of the light receiving element are not limited in particular, and the light receiving element may be provided by disposing a photodiode or phototransistor made of amorphous silicon, crystalline silicon, CdS, or CdSe. Furthermore, it may be a CCD (charge coupled device) linear image sensor. In addition, the light receiving portion 12 may be a multi-chip type linear image sensor provided by arranging a plurality of ICs (integrated circuits) each having fabricated components such as photodiode, phototransistor, driver circuit, and amplifier circuit. Furthermore, as necessary, an electric circuit such as driver circuit or amplifier circuit, or a connector for externally extracting a signal may be mounted on the substrate 13. In addition, when an A/D converter, various kinds of correction circuits, an image processing circuit, a line memory, and an I/O control circuit are also mounted on the substrate 13, the signal can be externally extracted as a digital signal.

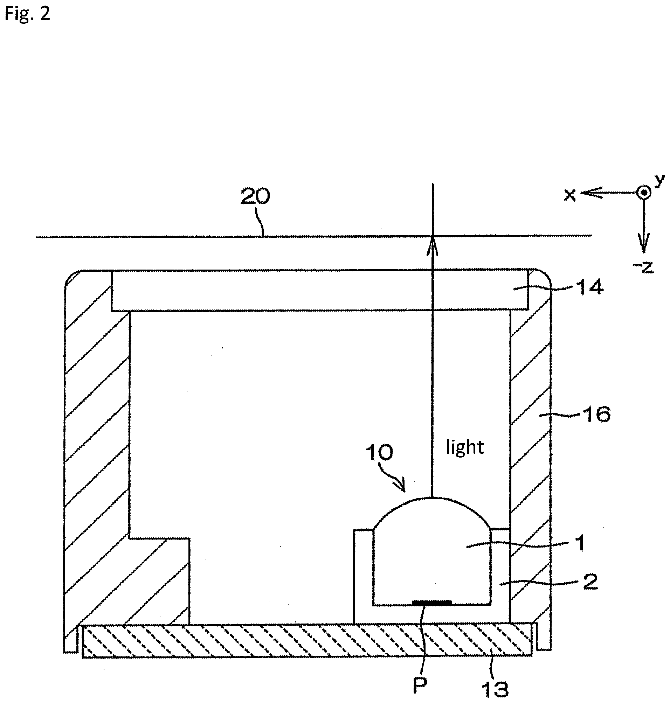

In addition, the above-described optical line sensor unit is the reflective type optical line sensor unit which receives the light emitted from the line light source 10 toward the paper sheet and reflected by the paper sheet, but as illustrated in FIG. 2, it may be a transmissive type optical line sensor unit which receives a light emitted from the line light source 10 toward the paper sheet and passed through the paper sheet, in which the line light source 10 is set opposite to the light receiving portion 12 across the focal plane 20. In this case, other than the structure in which the line light source 10 is positioned under the focal plane 20, the structure of the line light source 10 itself is the same as that described above. Furthermore, the reflective type optical line sensor unit and the transmissive type optical line sensor unit may be both set.

### <Line light source>

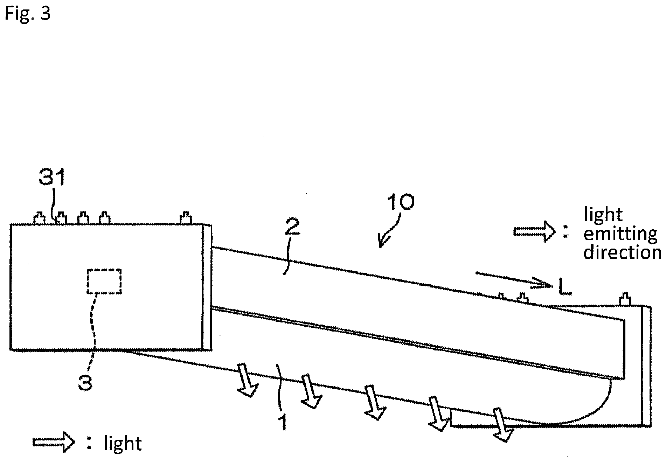

FIG. 3 is a perspective view schematically illustrating an appearance of the line light source 10 in the optical line sensor unit illustrated in FIG. 1. FIG. 4 is an exploded perspective view of component members of the line light source 10, and FIG. 5 is a side view of the line light source 10. In addition, a cover member 2 is not illustrated in FIG. 5.

The line light source 10 includes a transparent light guide 1 extending along a longitudinal direction L, the second light source portion 3 provided in the vicinity of one end surface in the longitudinal direction L, the first light source portion 4 provided in the vicinity of the other end surface in the longitudinal direction L, the cover member 2 for holding side surfaces (bottom side surface 1a and right and left side surfaces 1b and 1c) of the light guide 1, and a light diffusion pattern P which is formed on a light diffusion pattern formation surface 1g obliquely provided between the bottom side surface 1a and the right and left side surfaces 1b so that the lights emitted from the second light source portion 3 and the first light source portion 4 to end surfaces 1e and 1f of the light guide 1, respectively and traveling in the light guide 1 are diffused and refracted and emitted from a light exit surface 1d of the light guide 1. In addition, preferably, the line light source 10 further includes a second filter 6 and a first filter 7 formed at the end surfaces 1e and 1f of the light guide 1, respectively.

The light guide 1 may be made of resin having high transmittance of light such as acrylic resin, or optical glass, but in the embodiment of the present invention, since the first light source portion 4 emits the UV light, the light guide 1 is preferably made of fluorine-based resin or cycloolefin-based resin which is relatively small in attenuation due to the UV light (refer to Patent Document 2).

The light guide 1 is in the form of a thin and long pillar shape, and its cross-sectional surface perpendicular to the longitudinal direction L has substantially the same shape and the same dimension at any cut point in the longitudinal direction L. Furthermore, a proportion of the light guide 1, that is, a ratio of a length of the light guide 1 in the longitudinal direction L, to a height H of the cross-sectional surface perpendicular to the longitudinal direction L is more than 10 and preferably more than 30. That is, when the length of the light guide 1 is 200 mm, the height H of the cross-sectional surface perpendicular to the longitudinal direction L is about 5 mm, for example.

The side surfaces of the light guide 1 are composed of five side surfaces, that is, the light diffusion pattern formation surface 1g (corresponding to the obliquely cut surface of the light guide 1 in FIG. 4), the bottom side surface 1a, the right and left side surfaces 1b and 1c, and the light exit surface 1d (corresponding to the upper surface of the light guide 1 in FIG. 4). The bottom side surface 1a and the right and left side surfaces 1b and 1c have a planar shape, while the light exit surface 1d has an outwardly convex and smoothly curved shape in order to achieve a light focusing effect of the lens. However, the light exit surface 1d is not always required to have the convex curved shape, and it may have a planar shape. In this case, the condenser lens for the light emitted from the light guide 1 is to be disposed so as to face the planar surface 1d.

The light diffusion pattern P on the light diffusion pattern formation surface 1g linearly extends along the longitudinal direction L of the light guide 1 with widths equally spaced. A dimension of the light diffusion pattern P along the longitudinal direction L is set so as to be longer than a length of a reading receiving portion of the image sensor (that is, a width of a reading region of the light receiving portion 12).

The light diffusion pattern P is composed of a plurality of V-shaped grooves in the light diffusion pattern formation surface 1g of the light guide 1. Each of the plurality of V-shaped grooves is formed so as to extend in a direction perpendicular to the longitudinal direction L of the light guide 1, and has the same length. The V-shaped groove may have a shape of an isosceles triangle in a cross-sectional surface, for example.

By the light diffusion pattern P, the light introduced from the end surfaces 1e and 1f of the light guide 1 and traveling in the light guide 1 can be refracted and diffused, and then emitted from the light exit surface 1d along the longitudinal direction L with uniform brightness. Thus, the light can almost uniformly illuminate the paper sheet along the longitudinal direction L of the light guide 1 as a whole, so that brightness unevenness is not caused.

Furthermore, the V-shape of the groove in the light diffusion pattern P is just one example, and the shape may be changed to a U-shape, for example instead of the V-shape as long as the brightness unevenness is kept unnoticeable. The width of the light diffusion pattern P is not necessarily equally spaced, and the width may vary along the longitudinal direction L of the light guide 1. A depth of the groove and an opening width of the groove may be also appropriately changed.

The cover member 2 is thin and long along the longitudinal direction L of the light guide 1 and has a bottom surface 2a facing the light diffusion pattern formation surface 1g of the light guide 1, a right side surface 2b facing the right side surface 1b of the light guide 1, and a left side surface 2c facing the left side surface 1c of the light guide 1 so as to cover the bottom side surface 1a and the right and left side surfaces 1b and 1c of the light guide 1. Each of these three side surfaces is a planar surface, and three inner surfaces of them make an almost U-shaped concave portion in cross-sectional view, so that the light guide 1 can be inserted in this concave portion. When the light guide 1 is inserted, the bottom surface 2a of the cover member 2 adheres to the bottom side surface 1a of the light guide 1, the right side surface 2b of the cover member 2 adheres to the right side surface 1b of the light guide 1, and the left side surface 2c adheres to the left side surface 1c of the light guide 1. Therefore, the light guide 1 can be protected by the cover member 2.

In addition, the cover member 2 is not limited to a transparent cover, and it may be translucent or opaque cover. For example, the cover member 2 may be a member molded with highly reflective white resin or may be a resin molded member coated with white resin in order to reflect the light leaked from the side surface other than the light exit surface of the light guide 1, back into the light guide 1. Alternatively, the cover member 2 may be made of metal such as stainless or aluminum.

The second light source portion 3 is a light source which emits a visible light, or a light in a wavelength range from the visible light to an infrared light, and for example, it is composed of a plurality of LEDs (light emitting diodes) which emit near-infrared, red, green, and blue lights having respective wavelengths. Furthermore, in a case where a white light mixed with red, green, and blue lights is emitted, the three colors of red, green, and blue may be simultaneously emitted, or a fluorescent white light may be emitted by mixing a fluorescent agent into a sealing agent of the LED light source.

The first light source portion 4 is a light source which emits a UV light to the light guide 1, and it may be an LED light source which emits a UV light having a wavelength of 300 nm to 400 nm. Preferably, it may be a diode which emits a UV light having a peak light emission wavelength of 330 nm to 380 nm.

Each of the second light source portion 3 and the first light source portion 4 has a terminal 31 to be used when it is mounted on the substrate 5, and after the terminal 31 is inserted in the substrate 5 and bonded with solder, each of them is electrically connected to a drive power supply (not illustrated). The drive power supply has a circuit configuration which can drive the second light source portion 3 and the first light source portion 4 at the same time or at a temporally shifted time by selecting an electrode terminal for applying a voltage to the second light source portion 3 and an electrode terminal for applying a voltage to the first light source portion 4. Furthermore, among the plurality of LEDs incorporated in the second light source portion 3, certain LEDs can be selected to emit lights at the same time or a temporally shifted time.

Thus, with the above-described compact configuration, the visible light or the light in the wavelength range from the visible light to the infrared light can enter from the second light source portion 3 into the light guide 1 through the end surface 1e, and the UV light can enter from the first light source portion 4 into the light guide 1 through the end surface 1f. Thus, the light emitted from the first light source portion 4 or the light emitted from the second light source portion 3 can exit from the light exit surface 1d of the light guide 1.

Preferably, the second filter 6 is provided at the end surface 1e of the light guide 1 where the second light source portion 3 is set, to transmit the infrared light and the visible light having a wavelength range of 420 nm or more and to block the UV light having a wavelength range less than 400 nm by reflecting or absorbing the UV light. In addition, the first filter 7 is set at the end surface 1f of the light guide 1 near the first light source portion 4, to transmit the UV light having the wavelength range less than 400 nm and to block the infrared light and the visible light having the wavelength range of 420 nm or more by reflecting or absorbing those lights.

The second filter 6 and the first filter 7 are not limited in particular, and any material and any structure can be used for them as long as they can block the intended wavelength range. For example, in the case of a reflective filter, it is preferably an interference filter (bandpass filter) which is provided by forming multi-layer thin films having different transmittances or refractive indexes, on a glass surface by vapor deposition with metal oxide or dielectric substance.

As for the reflective interference filter, multi-layer films having adjusted transmittances, refractive indexes, and film thicknesses are formed by vapor deposition with silicon oxide and tantalum pentoxide, for example to obtain intended bandpass filter characteristics. In addition, as a matter of course, a bandpass filter which has been conventionally produced for usual optical industries may be used as long as required performance is satisfied.

In the case where the interference filter is used as the second filter 6 and the first filter 7, when the intended transmission range cannot be adjusted only with the interference filter, a thin film formed of metal, or its oxide, nitride, or fluoride is to be further applied to ensure the intended wavelength characteristics.

When the second filter 6 is a filter which absorbs the UV light, the UV light absorbing film may be formed by mixing or coating an organic UV light absorbing agent in or on a transparent film. Furthermore, it may be the interference filter in which multi-layer films having adjusted transmittances, refractive indexes, and film thicknesses are formed by vapor deposition with silicon oxide and titanium oxide, for example to obtain intended wavelength characteristics which block the UV light by both functions of reflection and absorption.

Furthermore, when the first filter 7 is the filter which absorbs the visible light and the infrared light, a substance which transmits the UV light and blocks the visible light and the infrared light may be added to the film.

Furthermore, the second filter 6 and the first filter 7 can be set for the light guide 1 by any method, and the end surfaces 1e and 1f of the light guide 1 may be covered with them by coating or vapor deposition. Alternatively, the film-like or plate-like second filter 6 and first filter 7 may be prepared and set so as to adhere to the end surfaces 1e and 1f of the light guide 1, or to be apart from the end surfaces 1e and 1f by a certain distance, respectively.

Furthermore, the second filter 6 and the first filter 7 may be set at the second light source portion 3 and the first light source portion 4, respectively instead of being set at the end surfaces 1e and 1f of the light guide 1. In this case, the light source portions 3 and 4 may be covered with the filters 6 and 7 by coating or vapor deposition, respectively, or the film-like or plate-like filters 6 and 7 may be prepared and set so as to adhere to the light source portions 3 and 4, respectively. Still alternatively, the second filter 6 may be configured such that a substance which transmits the visible light or the light in the wavelength range from the visible light to the infrared light and blocks the UV light is added to a sealing agent of the second light source portion 3. Similarly, the first filter 7 may be configured such that a substance which transmits the UV light and blocks the visible light or the light in the wavelength range from the visible light to the infrared light is added to a sealing agent of the first light source portion 4.

When the first filter 7 is the filter which transmits the UV light and reflects or absorbs the infrared light and the visible light, the following merits are provided. First, assumption is made that the first light source portion 4 consists of a mounting base made of material such as aluminum oxide ceramics which emits fluoresce having a wavelength range around 690 nm when the UV light illuminates. When the UV light is emitted from the first light source portion 4 and illuminates the mounting base of the first light source portion 4, the fluoresce having the wavelength of around 690 nm is secondarily emitted and this needs to be prevented from entering into the light guide 1. Thus, since the first filter 7 is designed to reflect or absorb the infrared light and the visible light, the secondarily emitted fluorescence is prevented from entering into the light guide 1, so that unnecessary fluoresce can be prevented from being emitted from the light exit surface 1d of the light guide 1. As a result, contrast of UV fluorescence of the paper sheet can be improved. Furthermore, other than the aluminum oxide ceramics which emits fluorescence from the UV light, in a case where fluorescence is emitted from a sealing resin, secondary emission can be similarly prevented.

When the second filter 6 is the filter which transmits the infrared light and the visible light and reflects or absorbs the UV light, the following merits are provided. First, assumption is made that the second light source portion 3 consists of a mounting base made of material such as aluminum oxide ceramics which emits fluorescence having a wavelength range around 690 nm when the UV light illuminates. When the UV light emitted from the first light source portion 4 passes through the end surface 1e of the light guide 1 and illuminates the second light source portion 3, the fluorescence in the vicinity of 690 nm is secondarily emitted from the second light source portion 3 and this needs to be prevented from entering into the light guide 1. Thus, when the second filter 6 is designed to reflect or absorb the UV light and prevent the UV light from going out of the end surface 1e of the light guide 1, the UV light never illuminate the second light source portion 3. Therefore, unnecessary fluoresce can be prevented from being emitted from the light exit surface 1d of the light guide 1. As a result, contrast of UV fluorescence of the paper sheet is improved.

According to the embodiment of the present invention, the second filter 6 preferably transmits the infrared light and the visible light and reflects the UV light, and the following merits are provided. That is, since the UV light emitted from the first light source portion 4 into the light guide 1 is reflected by the second filter 6 and returned to the light guide 1, an amount of the UV light is increased, so that an amount of the UV light emitted from the light exit surface 1d of the light guide 1 can be increased. In this case, the second filter 6 transmits the infrared light and the visible light emitted from the second light source portion 3, so that the infrared light and the visible light from the second light source portion 3 is not prevented from entering into the light guide 1.

Furthermore, when the first filter 7 transmits the UV light and reflects the infrared light and the visible light, since the visible light and the infrared light emitted from the second light source portion 3 into the light guide 1 are reflected by the first filter 7 and returned to the light guide 1, an amount of the lights is increased, so that an amount of the visible light and infrared light emitted from the light exit surface 1d of the light guide 1 can be increased. In addition, since the first filter 7 transmits the UV light emitted from the first light source portion 4, the UV light can be emitted from the light exit surface 1d of the light guide 1.

The embodiment of the present invention has been described in the above, but the present invention is not limited to the above embodiment. For example, the second light source portion 3 is the light source which emits the visible light or the light in the wavelength range from the visible light to the infrared light in the above, but it may be a light source only emitting the visible light. In addition, the formation surface of the light diffusion pattern P may be set on any surface except for the light exit surface 1d of the light guide 1. For example, the light diffusion pattern is formed on the bottom side surface 1a and this surface may serve as the formation surface of the light diffusion pattern P (in this case, there is no need to obliquely form the surface between the bottom side surface 1a and the right and left side surfaces 1b). Furthermore, various variations can be made within the scope of the present invention.

### DESCRIPTION OF REFERENCE SIGNS

- 1: light guide
- 1d: light exit surface
- 1e: second end surface
- 1f: first end surface
- 1g: light diffusion pattern formation surface of light guide 1
- 3: second light source portion
- 4: first light source portion
- 6: second filter
- 7: first filter
- 10: line light source
- 11: lens array
- 12: light receiving portion
- 15: third filter

## Claims

1. A line light source being used as a light source of an optical line sensor unit for reading a paper sheet, comprising:
a light guide (1) extending in a longitudinal direction and made of resin or optical glass which transmits a light in a wavelength range (a) from UV light to a visible light, or (b) from UV light through visible light to infrared light;
a first light source portion (4) disposed at a first end surface (1f) of the light guide to emit UV light; and
a second light source portion (3) disposed at a second end surface (1e) opposed to the first end surface of the light guide in the longitudinal direction to emit (a) visible light or (b) light in a wavelength range from visible light to infrared light;
a first optical filter (7) disposed between the first end surface of the light guide and the first light source portion, or covered to the first end surface of the light guide, transmitting the UV light emitted from the first light source portion, and reflecting or blocking (a) the visible light or (b) the light in the wavelength range from visible light to infrared light to prevent fluorescence emitted from the first light source portion from entering into the light guide; and
a second optical filter (6) disposed between the second end surface of the light guide and the second light source portion, or covered to the second end surface of the light guide, transmitting (a) the visible light or (b) the light in the wavelength range from visible light to infrared light emitted from the second light source portion, and reflecting or blocking UV light to prevent the UV light emitted from the first light source portion from illuminating the second light source portion through the second end surface of the light guide, and fluorescence secondarily emitted from the second light source portion from entering into the light guide, wherein
the light emitted from the first light source portion, or the light emitted from the second light source portion is emitted from a light exit surface of the light guide.

2. The line light source according to claim 1, wherein
the UV light going out of the first light source portion is emitted so as not to temporally overlap with (a) the visible light or (b) the light in the wavelength range from visible light to infrared light emitted from the second light source portion, and
the second optical filter blocks the UV light emitted from the first light source portion, to prevent the UV light emitted from the first light source portion from illuminating the second light source portion through the second end surface of the light guide.

3. The line light source according to claim 1 or 2, wherein
each of the second optical filter and the first optical filter is provided by forming multi-layer thin films having different transmittances and/or refractive indexes by vapor deposition with dielectric substance or metal oxide.

4. The line light source according to any one of claims 1 to 3, wherein
the second light source portion is a white light source including a UV LED and a fluorescent agent.

5. The line light source according to any one of claims 1 to 3, wherein
the second light source portion is a white light source including a blue LED and a fluorescent agent.

6. The line light source according to any one of claims 1 to 5, wherein
a light diffusion pattern (P) is formed on a side surface of the light guide.

7. An optical line sensor unit comprising:
the line light source according to any one of claims 1 to 6;
a lens array (11) for guiding a light emitted from the line light source and reflected by or passed through the paper sheet; and
a light receiving portion (12) for receiving a light focused by the lens array and converting the light to an electric signal, wherein
a third filter (15) is provided at a position between the paper sheet and the light receiving portion to transmit (a) visible light or a(b) light in a wavelength range from visible light to infrared light, and block UV light to prevent the UV light from entering into the light receiving portion.

## Patentansprüche

1. Linienförmige Lichtquelle, die als Lichtquelle einer optischen Zeilensensoreinheit zum Lesen eines Papierblatts eingesetzt wird und die Folgendes umfasst:
einen Lichtleiter (1), der sich in eine Längsrichtung erstreckt und aus Harz oder optischem Glas hergestellt ist, das ein Licht in einem Wellenlängenbereich (a) von UV-Licht bis zu sichtbarem Licht oder (b) von UV-Licht über sichtbares Licht bis zu Infrarotlicht überträgt;
einen ersten Lichtquellenabschnitt (4), der an einer ersten Endfläche (1f) des Lichtleiters angeordnet ist, um UV-Licht auszustrahlen; und
einen zweiten Lichtquellenabschnitt (3), der an einer zweiten Endfläche (1e), die zur ersten Endfläche des Lichtleiters in Längsrichtung entgegengesetzt angeordnet ist, um (a) sichtbares Licht oder (b) Licht in einem Wellenlängenbereich von sichtbarem Licht bis zu Infrarotlicht auszustrahlen;
einen ersten optischen Filter (7), der zwischen der ersten Endfläche des Lichtleiters und dem ersten Lichtquellenabschnitt angeordnet ist oder die erste Endfläche des Lichtleiters abdeckt und der das UV-Licht, das von dem ersten Lichtquellenabschnitt ausgestrahlt wird, durchlässt, und der (a) das sichtbare Licht oder (b) das Licht im Wellenlängenbereich von sichtbarem Licht bis Infrarotlicht reflektiert oder blockiert, um zu verhindern, dass Fluoreszenz, die von dem ersten Lichtquellenabschnitt ausgestrahlt wird, in den Lichtleiter eintritt; und
einen zweiten optischen Filter (6), der zwischen der zweiten Endfläche des Lichtleiters und dem zweiten Lichtquellenabschnitt angeordnet ist oder die zweite Endfläche des Lichtleiters abdeckt und der (a) das sichtbare Licht oder (b) das Licht im Wellenlängenbereich von sichtbarem Licht bis Infrarotlicht, das von dem zweiten Lichtquellenabschnitt ausgestrahlt wird, durchlässt, und der UV-Licht reflektiert oder blockiert, um zu verhindern, dass das UV-Licht, das von dem ersten Lichtquellenabschnitt ausgestrahlt wird, den zweiten Lichtquellenabschnitt durch die zweite Endfläche des Lichtleiters beleuchtet und Fluoreszenz, die sekundär von dem zweiten Lichtquellenabschnitt ausgestrahlt wird, in den Lichtleiter eintritt; wobei
das Licht, das von dem ersten Lichtquellenabschnitt ausgestrahlt wird, oder das Licht, das von dem zweiten Lichtquellenabschnitt ausgestrahlt wird, von einer Lichtaustrittsfläche des Lichtleiters ausgestrahlt wird.

2. Linienförmige Lichtquelle nach Anspruch 1, wobei
das UV-Licht, das aus dem ersten Lichtquellenabschnitt austritt, derart ausgestrahlt wird, dass es nicht temporär mit (a) dem sichtbaren Licht oder (b) dem Licht im Wellenlängenbereich von sichtbarem Licht bis Infrarotlicht, das von dem zweiten Lichtquellenabschnitt ausgestrahlt wird, überlappt, und
der zweite optische Filter das UV-Licht, das von dem ersten Lichtquellenabschnitt ausgestrahlt wird, blockiert, um zu verhindern, dass UV-Licht, das von dem ersten Lichtquellenabschnitt ausgestrahlt wird, den zweiten Lichtquellenabschnitt durch die zweite Endfläche des Lichtleiters beleuchtet.

3. Linienförmige Lichtquelle nach Anspruch 1 oder 2, wobei der zweite optische Filter und der erste optische Filter jeweils bereitgestellt ist, indem mehrschichtige Dünnfilme mit unterschiedlichen Durchlässigkeiten und/oder Brechungsindizes durch Dampfabscheidung mit dielektrischer Substanz oder Metalloxid gebildet sind.

4. Linienförmige Lichtquelle nach einem der Ansprüche 1 bis 3, wobei der zweite Lichtquellenabschnitt eine Weißlichtquelle umfassend eine UV-LED und ein fluoreszierendes Mittel ist.

5. Linienförmige Lichtquelle nach einem der Ansprüche 1 bis 3, wobei der zweite Lichtquellenabschnitt eine Weißlichtquelle umfassend eine blaue LED und ein fluoreszierendes Mittel ist.

6. Linienförmige Lichtquelle nach einem der Ansprüche 1 bis 5, wobei ein Lichtstreuungsmuster (P) auf einer Seitenfläche des Lichtleiters gebildet ist.

7. Optische Zeilensensoreinheit, die Folgendes umfasst:
eine linienförmige Lichtquelle nach einem der Ansprüche 1 bis 6;
eine Linsenanordnung (11) zum Leiten von Licht, das von der linienförmigen Lichtquelle ausgestrahlt und von dem Papierblatt reflektiert wird oder durch dieses durchgeht; und
einen Lichtaufnahmeabschnitt (12) zum Aufnehmen von Licht, das von der Linsenanordnung fokussiert wird, und Umwandeln des Lichts in ein elektrisches Signal, wobei
ein dritter Filter (15) an einer Position zwischen dem Papierblatt und dem Lichtaufnahmeabschnitt bereitgestellt ist, um (a) sichtbares Licht oder (b) Licht in einem Wellenlängenbereich von sichtbarem Licht bis Infrarotlicht zu übertragen und UV-Licht zu blockieren, um zu verhindern, dass UV-Licht in den Lichtaufnahmeabschnitt eintritt.

## Revendications

1. Source de lumière linéaire utilisée comme source de lumière d'une unité de capteur linéaire optique pour lire une feuille de papier, comprenant :
un guide de lumière (1) s'étendant dans une direction longitudinale et réalisé en une résine ou un verre optique qui transmet une lumière dans une plage de longueur d'onde (a) allant de la lumière ultraviolette, UV, à une lumière visible, ou (b) de la lumière UV à travers la lumière visible jusqu'à la lumière infrarouge ;
une première partie de source de lumière (4) disposée sur une première surface d'extrémité (1f) du guide de lumière pour émettre de la lumière UV ; et
une seconde partie de source de lumière (3) disposée sur une seconde surface d'extrémité (1e) opposée à la première surface d'extrémité du guide de lumière dans la direction longitudinale pour émettre (a) une lumière visible ou (b) une lumière dans une plage de longueur d'onde allant de la lumière visible à la lumière infrarouge ;
un premier filtre optique (7) disposé entre la première surface d'extrémité du guide de lumière et la première partie de source de lumière, ou recouvrant la première surface d'extrémité du guide de lumière, transmettant la lumière UV émise par la première partie de source de lumière, et réfléchissant ou bloquant (a) la lumière visible ou (b) la lumière dans la plage de longueur d'onde allant de la lumière visible à la lumière infrarouge pour empêcher une fluorescence émise par la première partie de source de lumière d'entrer dans le guide de lumière ; et
un deuxième filtre optique (6) disposé entre la seconde surface d'extrémité du guide de lumière et la seconde partie de source de lumière, ou recouvrant la seconde surface d'extrémité du guide de lumière, transmettant (a) la lumière visible ou (b) la lumière dans la plage de longueur d'onde allant de la lumière visible à la lumière infrarouge émise par la seconde partie de source de lumière, et réfléchissant ou bloquant la lumière UV pour empêcher la lumière UV émise par la première partie de source de lumière d'illuminer la seconde partie de source de lumière à travers la seconde surface d'extrémité du guide de lumière, et une fluorescence émise en second lieu par la seconde partie de source de lumière d'entrer dans le guide de lumière, dans laquelle
la lumière émise par la première partie de source de lumière, ou la lumière émise par la seconde partie de source de lumière est émise à partir d'une surface de sortie de lumière du guide de lumière.

2. Source de lumière linéaire selon la revendication 1, dans laquelle
la lumière UV sortant de la première partie de source de lumière est émise de manière à ne pas chevaucher temporairement (a) la lumière visible ou (b) la lumière dans la plage de longueur d'onde allant de la lumière visible à la lumière infrarouge émise à partir de la seconde partie de source de lumière, et
le second filtre optique bloque la lumière UV émise à partir de la première partie de source de lumière, pour empêcher la lumière UV émise à partir de la première partie de source de lumière d'illuminer la seconde partie de source de lumière à travers la seconde surface d'extrémité du guide de lumière.

3. Source de lumière linéaire selon la revendication 1 ou 2, dans laquelle
chacun du deuxième filtre optique et du premier filtre optique est fourni en formant des films minces multicouches ayant des transmittances et/ou des indices de réfraction différents par dépôt en phase vapeur avec une substance diélectrique ou un oxyde métallique.

4. Source de lumière linéaire selon l'une quelconque des revendications 1 à 3, dans laquelle
la seconde partie de source de lumière est une source de lumière blanche comprenant une diode électroluminescente, DEL, UV, et un agent fluorescent.

5. Source de lumière linéaire selon l'une quelconque des revendications 1 à 3, dans laquelle
la seconde partie de source de lumière est une source de lumière blanche comprenant une DEL bleue et un agent fluorescent.

6. Source de lumière linéaire selon l'une quelconque des revendications 1 à 5, dans laquelle
un motif de diffusion de lumière (P) est formé sur une surface latérale du guide de lumière.

7. Unité de capteur linéaire optique comprenant :
la source de lumière linéaire selon l'une quelconque des revendications 1 à 6 ;
un réseau de lentilles (11) pour guider une lumière émise à partir de la source de lumière linéaire et réfléchie par ou passée à travers la feuille de papier ; et
une partie de réception de lumière (12) pour recevoir une lumière focalisée par le réseau de lentilles et convertir la lumière en un signal électrique, dans laquelle
un troisième filtre (15) est prévu au niveau d'une position entre la feuille de papier et la partie de réception de lumière pour transmettre (a) de la lumière visible ou (b) une lumière dans une plage de longueur d'onde allant de la lumière visible à la lumière infrarouge, et bloquer une lumière UV pour empêcher la lumière UV de pénétrer dans la partie de réception de lumière.
